**Europäisches Patentamt**

**European Patent Office**

**Office européen des brevets**

(11) Veröffentlichungsnummer: **0 069 392**
**A2**

(12) **EUROPÄISCHE PATENTANMELDUNG**

(21) Anmeldenummer: **82106035.7**

(22) Anmeldetag: **06.07.82**

(51) Int. Cl.³: **G 01 D 5/16**

(30) Priorität: **07.07.81 DE 3126806**

(43) Veröffentlichungstag der Anmeldung:
**12.01.83** Patentblatt **83/2**

(84) Benannte Vertragsstaaten:
**DE FR GB NL**

(71) Anmelder: **SIEMENS AKTIENGESELLSCHAFT Berlin und München**
**Postfach 22 02 61**
**D-8000 München 22(DE)**

(72) Erfinder: **Boehner, Michael, Dipl.-Ing.**
**Anzengruberstrasse 18**
**D-8014 Neubiberg(DE)**

(72) Erfinder: **Metzdorf, Werner, Dipl.-Phys.**
**Franz-Schubert-Strasse 8**
**D-8025 Unterhaching(DE)**

(54) **Digitaler Messsensor, seine Verwendung und Verfahren zu seiner Herstellung.**

(57) Um bei einem digitalen Meßsensor mit zwei relativ zueinander verstellbaren Teilen, von denen einer einen Maßstab und der andere einen Detektor zum Abtasten des Maßstabes und zum Erzeugen elektrischer Signale trägt, wobei der digitale Meßsensor eine Elektronik zum Verarbeiten der Detektorsignale aufweist, und wobei der Maßstab ablesbare magnetische Markierungen aufweist, ein Gleichspannungssignal direkt dem Detektor entnehmen zu können, weist der Detektor mindestens einen magnetoresistiven Sensor (1) auf. Um mit einem erfindungsgemäßen digitalen Meßsensor auch Lesesignale bei einer Relativgeschwindigkeit Null zwischen Maßstab und Detektor zu erhalten, werden mehrere Sensoren (1) mit linearer Kennlinie nebeneinander angeordnet, wobei die Längeninformation codiert in mehreren parallelen Markierungsspuren enthalten ist.

FIG 2

EP 0 069 392 A2

SIEMENS AKTIENGESELLSCHAFT

Berlin und München

Unser Zeichen

VPA 81 P 7 0 7 0 E

Digitaler Meßsensor, seine Verwendung und Verfahren zu seiner Herstellung.

Die Erfindung betrifft einen digitalen Meßsensor nach dem Oberbegriff des Anspruchs 1.

Aus der DE-OS 28 34 519 ist eine digitale Längenmeßvorrichtung bekannt, mit zwei relativ zueinander verstellbaren Teilen, von denen einer einen Maßstab und der andere einen Detektor zum Abtasten des Maßstabes und zum Erzeugen elektrischer Signale, die der abgetasteten Länge entsprechen, trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, und wobei der Detektor ein Lesekopf für die Markierungen ist. Als eine weiterverarbeitende Einrichtung kann dabei eine Digital-Anzeigevorrichtung verwendet werden. Der Markierungsträger kann dabei eine Magnetschicht sein, wobei die Markierungen durch sinusförmige Magnetisierung zweier Spuren gebildet sind, wobei für jede Spur je ein Lesekopf vorhanden ist. Der Detektor kann mindestens einen flußempfindlichen Magnetkopf aufweisen, der zum Lesen bei geringer Relativgeschwindigkeit zwischen Detektor und Markierungsträger nach dem Prinzip eines magnetischen Modulators geschaltet ist.

Bei der angegebenen Veröffentlichung fehlen detaillierte Angaben über die Ausführung des Modulators vollständig. Werden die Leseköpfe als Ringköpfe ausgebildet, in deren rückwärtigem Spalt ein magnetischer Modulator eingesetzt ist, welcher von einem Steuergenerator mit einer Wechselfrequenz erregt wird, so ist die Herstellung eines sol-

My-Wi - 26.06.1981

chen unklar beschriebenen Lesekopfes aufwendig. Ein im Ringkern des Lesekopfes induzierter Nutzfluß ruft in der Wiedergabewicklung des Ringkopfes eine Wechselspannung von der doppelten Frequenz des Steuerwechselfeldes hervor. Diese Wechselspannung muß nach selektiver Verstärkung einem Phasengleichrichter zugeführt werden. Hier kann das ankommende Signal mit einer Wechselspannung doppelter Steuerfrequenz verglichen werden. Auf diese Weise entsteht im Ausgang des Phasengleichrichters ein der Flußrichtung und der Stärke des Magnetflusses im Aufzeichnungsträger proportionales Signal. Um also dieses Signal aus der in der Wiedergabewicklung hervorgerufenen Wechselspannung zu erhalten, ist eine zusätzliche aufwendige Schaltung erforderlich, um Fehler in diesem Meßsignal möglichst klein zu halten. Außerdem fehlen in der genannten Veröffentlichung wiederum detaillierte Angaben zum Frequenz-Verhältnis von Steuersignal zu Lesesignal. Abgesehen davon, daß in der genannten Veröffentlichung keine offenkundige Lehre gegeben ist, bleibt festzustellen, daß eine Modulatorschaltung in jedem Fall aufwendig ist.

Der vorliegenden Erfindung liegt die Aufgabe zugrunde, einen digitalen Meßsensor der eingangs genannten Art anzugeben, bei dem es möglich ist, ein Gleichspannungssignal direkt aus dem Detektor zu entnehmen, wobei dieses Gleichspannungssignal nicht erst über die Umwandlung über eine Wechselspannung detektiert werden muß.

Diese Aufgabe wird erfindungsgemäß durch einen digitalen Meßsensor der eingangs genannten Art gelöst, welcher die kennzeichnenden Merkmale des Anspruchs 1 aufweist.

Bei einem erfindungsgemäßen digitalen Meßsensor läßt man einen magnetoresistiven (MR-)Sensor über eine fest montierte, mit regelmäßigen Flußwechseln beschriebene hartmagnetische Schicht laufen und zählt die erfassten Flußwechsel elektronisch. Der MR-Sensor erfaßt den am Orte der Flußwechsel senkrecht aus dem Magnetband austretenden Fluß. Bei Verwendung von MR-Sensoren mit linearer Kennlinie kann ein Nulldurchgang des Magnetbandflusses direkt gemessen werden. Bei Verwendung von MR-Sensoren mit quadratischer Kennlinie muß der Nulldurchgang des Magnetbandflusses indirekt über eine Spannungsteilerschaltung erzeugt werden. Eine besondere Eigenschaft der MR-Sensoren ist, daß das von MR-Sensoren erzeugte Signal von der Relativgeschwindigkeit zwischen Detektor und Markierungsträger unabhängig ist.

Da der Streufluß exponentiell mit dem Abstand von der Magnetbandoberfläche abfällt (R.P. Hunt: IEEE Trans. MAG-7 (1971) 150-154), muß der Abstand vom Magnetband gut konstant gehalten werden. Insbesondere ist zu vermeiden, daß dieser Abstand vom Magnetband einen gewissen kritischen Wert überschreitet. Das wird am besten dadurch gewährleistet, daß man den MR-Sensor zwischen abriebfeste Materialien (z. B. Keramik, Glas, Silizium) einbettet und den so erhaltenen "Magnetkopf" mit leichter Federkraft gegen das Magnetband drückt. Der definierte Abstand von z. B. 20 $\mu$m wird dadurch erreicht, daß man den Kopf mit bekannten Schleif- und Poliertechniken auf seiner Stirnseite bis auf den gewünschten Abstand zum Sensor abträgt.

Damit der digitale Meßsensor nicht nur die Flußwechsel zählt, sondern auch Auf- und Abwärtszählung voneinander unterscheiden kann, werden die Markierungen von mehreren Sinusspuren gebildet, wobei jede Spur verschoben mit Flußwechseln gleichen Abstands beschrieben ist. Bei Verwendung von MR-Sensoren mit linearer Kennlinie werden mindestens zwei Spuren benötigt, bei Verwendung von MR-Sensoren mit quadratischer Kennlinie werden mindestens drei Spuren benötigt.

Die Größe der Widerstandsänderungen, die im MR-Sensor durch das Streufeld des Magnetbandes hervorgerufen werden kann, liegt bei einigen Prozent. Bei der Verarbeitung der Widerstandsänderungen zu Spannungssignalen und bei deren Weiterverarbeitung zu Zählimpulses dürfen nur die Widerstandsänderungen, welche durch das Streufeld des Magnetbandes hervorgerufen werden, nicht etwa die durch Temperaturänderung bedingten, erfaßt werden. Bei Verwendung von MR-Sensoren mit linearer Kennlinie werden daher Brückenschaltungen und bei Verwendung von MR-Sensoren mit quadratischer Kennlinie werden daher Spannungsteilerschaltungen benutzt, bei denen sich thermisch bedingte Änderungen der Widerstände nicht im Signal bemerkbar machen.

Die Magnetowiderstandsänderung selbst weist ebenfalls einen Temperaturgang (TK = -3,5 Promille/K) auf. Dieser Temperaturgang wirkt sich erst dann schädlich aus, wenn infolge dieses Temperaturrückganges die Flußwechsel des Magnetbandflusses nicht mehr erkannt werden. Um die temperaturabhängige Magnetowiderstandsänderung des MR-Sensors zu eliminieren, kann die nahezu trägheitslose, temperaturbedingte Widerstandsänderung eines weiteren, nicht den Flußwechseln des Magnetbandes ausgesetzten Festkörpers mit gleichem Temperaturkoeffizienten, wie ihndie Magnetowiderstandsänderung $\triangle$ R/R eines MR-Sensors aufzeigt, zur temperaturgesteuerten Verstärkungseinstellung benutzt werden.

MR-Sensoren können parallel nebeneinander angeordnet werden. Dabei sind alle Markierungsinformationen in mehreren parallel verlaufenden Spuren auf dem Markierungsträger angeordnet. MR-Sensoren können auch hintereinander angeordnet werden. Alle Markierungsinformationen müssen bei hintereinander angeordneten MR-Sensoren in einer einzigen Spur auf dem Markierungsträger enthalten sein. Bei hintereinander angeordneten MR-Sensoren

definieren die Sensorabstände die notwendige Phasenverschiebung zur Richtungserkennung.

Bei Verwendung von MR-Sensoren mit linearer Kennlinie werden die Signale eines jeden einzelnen MR-Sensors einzeln detektiert. Dabei liefern MR-Sensoren mit linearer Kennlinie direkt die Pegel des Magnetbandflusses. Um mit einem erfindungsgemäßen digitalen Meßsensor eine absolute Längeninformation zu erhalten, werden mehrere lineare

Sensoren nebeneinander angeordnet, wobei die Längeninformation codiert in mehreren parallelen Markierungsspuren enthalten ist. Dabei wird gleichzeitig die Notwendigkeit, elektrisch zu zählen, umgangen. Werden dabei die linearen Sensoren über Brückenschaltungen miteinander elektrisch verknüpft, so wird gleichzeitig der Vorteil erzielt, daß die Lesesignale unabhängig von thermisch bedingten Änderungen der Widerstände sind. Wird die Längeninformation beispielsweise binär codiert in 10 parallele Markierungsspuren geschrieben, so wird eine Auflösung der Längenmessung von 1‰ erreicht. In jeder Stellung des 10-spurigen MR-Sensors wird dann die Länge durch Abfragen der Widerstände       in den zehn Einzelsensoren, die jeweils lineare Kennlinien aufweisen, erhalten. Auch die Verwendung anderer Aufzeichnungscodes, wie z. B. des Gray-Codes, ist möglich.

Das der Erfindung zugrunde liegende Prinzip läßt sich auch zur Realisierung eines Winkelcodierers hoher Auflösung einsetzen. Die Erfindung ist überall anwendbar, wo eine Längenmessung mit hoher Auflösung sinnvoll ist, u. a. bei einer elektronischen Schieblehre, bei einem Drucksensor und bei einem Positionsgeber. Das der Erfindung zugrunde liegende Prinzip ist auch bei einer Mikrometerschraube anwendbar.

Für das Beschreiben der hartmagnetischen Schicht benötigt man einen induktiven Magnetkopf, der sich verhältnismäßig einfach mit den Methoden der Dünnschichttechnik oder aber auch mit anderen bekannten Methoden der Magnetkopfherstellung realisieren läßt.

Die Genauigkeit der hier vorgeschlagenen Längenmessung hängt vom exakten Abstand der Flußwechsel ab. Diese Abstandsgenauigkeit wird in erster Linie dadurch bestimmt, wie genau die Relativgeschwindigkeit Magnetkopf/hartmagnetische Schicht beim Beschreiben des Magnetbandes eingehalten werden kann. Ohne größere Vorkehrungen haben Magnetbandlaufwerke eine Geschwindigkeitstoleranz von 0,5%. Das ist für den hier vorgeschlagenen Anwendungsfall zu ungenau. Jedoch läßt sich mit entsprechendem elektronischen und/oder mechanischem Aufwand eine höhere Laufgenauigkeit erzielen. Eine weitere mögliche Quelle von Ungenauigkeit einer Längenmessung bildet die Notwendigkeit, das beschriebene Magnetband fest zu montieren. Zweckmäßig wird das Magnetband auf eine Schiene mit kleinem Temperaturkoeffizienten, z. B. auf Stahl, aufgeklebt. Bei entsprechend starker Haftung der Klebung wird zwar der dem Magnetband eigene Längenausdehnungskoeffizient weitgehend ausgeschaltet, die Klebung selbst könnte jedoch zu unterschiedlichen Dehnungen im Magnetband führen. In diesem Falle ist es zweckmäßig, mit Hilfe einer besonderen Vorrichtung jeden Magnetbandstreifen nach dem Aufkleben einzeln zu beschreiben. Unter diesen Umständen kann dann auch die Relativgeschwindigkeit Schreibkopf/Magnetband mit der notwendigen Genauigkeit eingehalten werden.

Die Erfindung wird anhand einiger in der Zeichnung dargestellter Ausführungsbeispiele näher erläutert.

Fig. 1 zeigt das Prinzip des MR-Sensors.

Fig. 2 zeigt die prinzipielle Anordnung von Sensoren und Magnetband für die digitale Längenmessung mit nicht linearen MR-Sensoren gemäß Fig.1.


Fig.3 zeigt eine Schaltung zur Signalerzeugung bei der digitalen Längenmessung mit drei nichtlinearen MR-Sensoren und Magnetband gemäß Fig.2.

Fig.4 zeigt den Verlauf des Magnetbandflusses unter den bewegten drei MR-Sensoren, des Ausgangssignals an den drei Leseverstärkern und des Ausgangssignals der drei Komparatoren gemäß Fig.3.

Fig.5 zeigt die Schaltung einer Auswertelogik für eine digitale Längenmeßvorrichtung mittels dreier MR-Sensoren und dreier Aufzeichnungsspuren auf Magnetband gemäß Fig.2 und Fig.3.

Fig.6 zeigt das Prinzip einer digitalen Längenmessung mit zwei hintereinander geschalteten, linearen MR-Sensoren in einer speziellen Sensoranordnung und einer Aufzeichnungsspur auf Magnetband.

Fig.7 zeigt die Magnetowiderstands-Kennlinie eines linearisierten MR-Sensors vom Barber-Pole-Typ und die Signalspannung eines solchen MR-Sensors bei Übersteue - rung.

Fig.8 zeigen je einen digitalen Winkelcodierer auf magne-
Fig.9 tischer Basis.

Fig.10 zeigt den Abfall des Streuflusses über dem Magnetband mit dem Sensor-Abstand d.

Fig.11 zeigt einen gefalteten MR-Sensor.


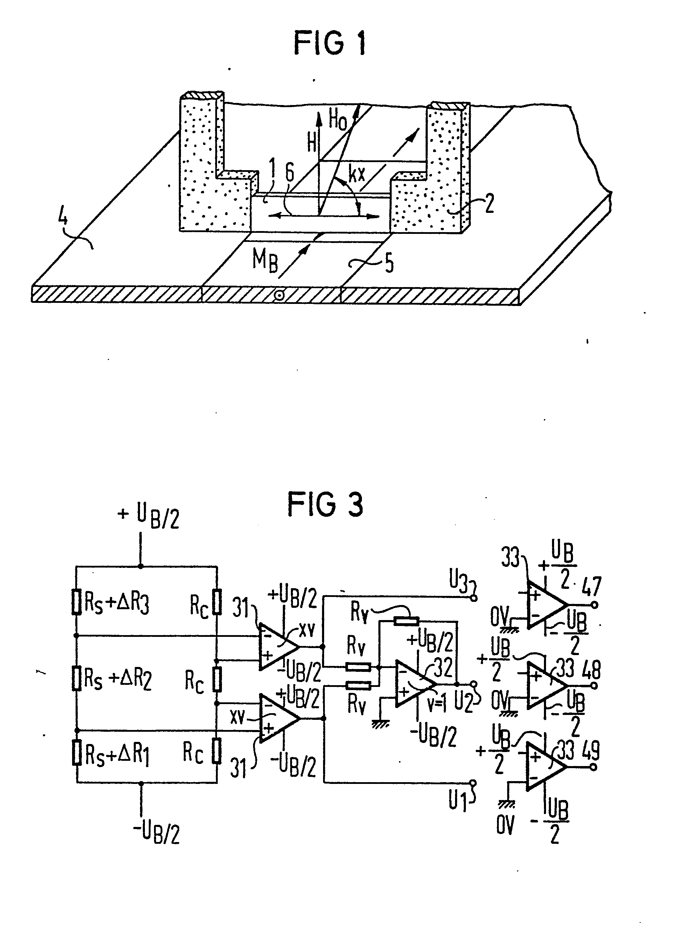

Fig.1 zeigt das Prinzip des MR-Sensors 1. Der MR-Sensor 1 ist im einfachsten Falle ein schmaler (z.B. 10 µm), dünner (z.B. 30 nm) Streifen aus einer magnetoresistiven Legierung (z.B. Permalloy 81/19; NI-CO 70/30). Ein solcher schmaler und dünner Streifen muß mit seiner Schmalkante senkrecht auf dem Magnetband 4 stehen. Das Magnetband 4 weist eine Magnetspur 5 mit einer sinusförmigen Magnetisierung $M_B = M_R \sin(kx)$ auf. Der MR-Sensor 1 wird durch das in Magnetbandlängsrichtung sinusförmige Magnetfeld $H = H_0 \cdot \sin(kx)$ erregt. Aufgrund der quadratischen Kennlinie des MR-Sensors 1 ergibt sich eine Widerstandsabnahme proportional zu $\sin^2(kx)$, solange $H_0 < H_k$ bleibt ($H_k$ = effektive Anisotropie-Feldstärke. Die Anisotropieachse liegt parallel zu dem Stromdichtevektor im MR-Sensor 1, wobei die beiden möglichen Richtungen dieses Stromdichtevektors mit 6 bezeichnet sind.) Der MR-Sensor 1 ist über Zuleitungen 2, welche aus Gold bestehen können, an eine Speisespannung angeschlossen.

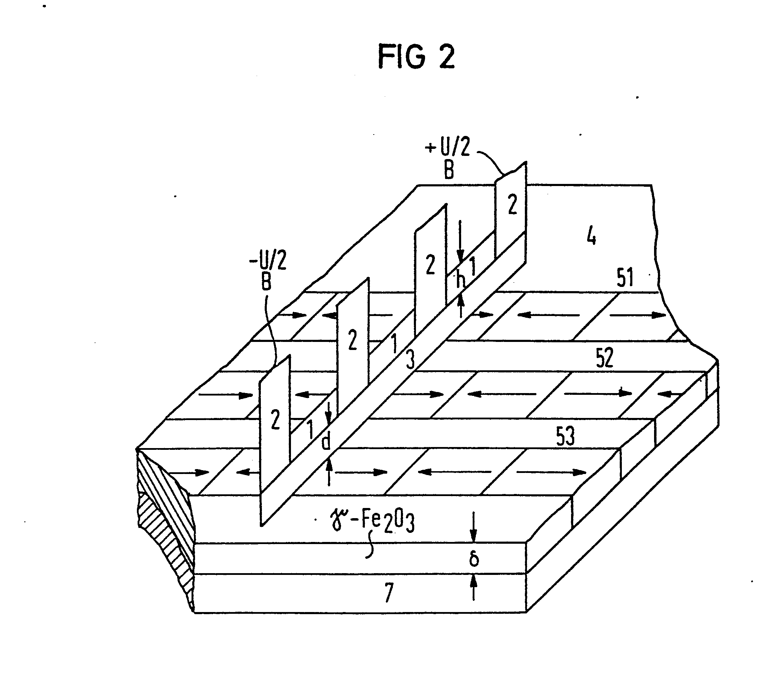

Fig. 2 zeigt die prinzipielle Anordnung von MR-Sensoren 1 und einem Magnetband 4 für die digitale Längenmessung mit nicht linearen MR-Sensoren gemäß Fig. 1. In Fig. 2 sind beispielsweise 3 MR-Sensoren 1 nebeneinander angeordnet. Diese 3 MR-Sensoren 1 fühlen drei parallele Spuren 51, 52, 53 ab, wobei jede Spur phasenverschoben mit periodischen Flußwechseln gleichen Abstands beschrieben ist. Soll die Längenmessung z. B. eine Auflösung von 10 μm haben, so muß in jeder der drei Spuren 51, 52, 53 der Flußwechselabstand 30 μm betragen. Die Flußwechsel einer jeden Spur müssen dabei um fortschreitende 10 μm gegen die Nachbarspur verschoben sein. Mit Hilfe der drei Aufzeichnungsspuren 51, 52, 53 mit 60° Phasenversatz ist es möglich, nicht nur die Flußwechsel zu zählen, sondern auch die Verschieberichtung zu erkennen. Die MR-Sensoren 1 haben eine Breite h und vom Magnetband 4 einen Abstand d, welcher durch einen unmagnetischen, abriebfesten Abstandshalter 3 gewährleistet wird. Mit $U_B$ ist die Versorgungsspannung bezeichnet, an welche die MR-Sensoren 1 über Zuleitungen 2 angeschlossen sind. Das Magnetband 4 mit der Dicke δ kann aus Eisenoxid ($\gamma\text{-Fe}_2\text{O}_3$) bestehen und auf einem Substrat 7 aus Polyester befestigt sein.

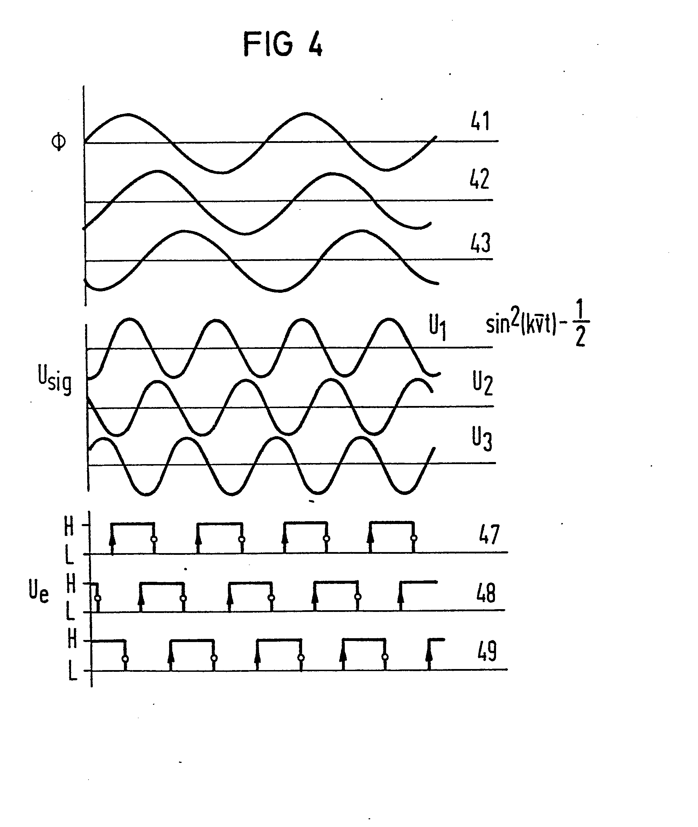

Fig. 3 zeigt eine Schaltung zur Signalerzeugung bei der digitalen Längenmessung mit drei nichtlinearen MR-Sensoren 1 und einem Magnetband 4. Die drei gleich großen MR-Sensoren 1 liegen in Serienschaltung an der Batteriespannung $U_B$. Ein zweiter Spannungsteiler, der ebenfalls aus drei gleich großen Widerständen $R_c$ besteht, liegt parallel dazu. Die Dimensionierung der absoluten Sensorwiderstandswerte $R_s$ bzw. der Widerstandswerte $R_c$ richtet sich nach der vorhandenen Speiseleistung oder der Belastbarkeit der Elemente selbst. Diese Dimensionierung hat keinen Einfluß auf die Größe des Sensorsignals.

Die MR-Sensoren 1 werden entsprechend Fig. 2 durch das in Magnetbandlängsrichtung sinusförmige Magnetfeld $H = H_0 \cdot \sin(kx)$ erregt. Gemäß Fig. 2 sind die Erregersignale der drei MR-Sensoren 1 jeweils um $60^o$ gegeneinander phasenverschoben. Die Widerstandsänderungen $\Delta R_i$, $i = 1, 2, 3$, über der Magnetbandlänge werden durch folgende Gleichungen beschrieben:

$$\Delta R_i = \Delta R \sin^2 \left[ kx + (i-1) \cdot 60^o \right], \quad i = 1, 2, 3.$$

$\Delta R$ = Die maximale Widerstandsänderung des Sensorwiderstands $R_s$.

Zwei Differenzverstärker 31 mit der Verstärkung v verstärken die zwischen den MR-Sensoren 1 und den korrespondierenden Punkten des parallel geschalteten Spannungsteilers abgegriffene Differenzspannung. Die beiden verstärkten Signale $U_1$ und $U_3$ sind damit bereits soweit aufbereitet, daß sie entsprechenden Komparatoren 33 zugeführt werden können. Das dritte Signal $U_2$ erhält man sehr einfach durch Summation der beiden ersten Signale $U_1$ und $U_3$ und anschließende Invertierung dieser Summe mit Hilfe einer Verstärkerschaltung, bestehend aus einem Differenzverstärker 32 und drei Widerständen $R_v$. Man macht sich dabei die Tatsache zunutze, daß die Summe aller drei Si-

gnale $U_i$, i = 1, 2, 3, verschwindet. Die drei Signale $U_1$, $U_2$, $U_3$ ergeben sich zu

$$U_i = \frac{\Delta R_i - \frac{1}{2} \cdot \Delta R}{3 \cdot R_s + 3/2 \cdot \Delta R} \cdot U_B \cdot v, \quad i = 1, 2, 3.$$

Die Differenzverstärkung v der Verstärker 31 sollte kleiner oder höchstens gleich dreimal dem Qotienten aus $R_s$ und $\Delta R$ sein, damit die Amplituden der Signale $U_1$, $U_2$, $U_3$ kleiner oder höchstens gleich der halben Speisespannung $U_B$ sind. Der Wellenvektor k ist eine Funktion der Periodenlänge $\lambda$, nämlich k = $2\pi/\lambda$. In x-Richtung sind die Magnetisierungsrichtungen in den Aufzeichnungsspuren 51, 52, 53, wie sie in Fig. 2 mit Pfeilen angedeutet sind, ausgerichtet. Zur Verbesserung des Störabstandes können die Komparatoren 33 mit Hysterese ausgestattet werden. Der Pluseingang des Differenzverstärkers 32 und die Minuseingänge der Komperatoren 33 liegen auf dem halben Potential zwischen $+U_B/2$ und $-U_B/2$.

Fig. 4 zeigt den zeitlich sinusförmigen Verlauf des Magentbandflusses $\emptyset$ unter den bewegten MR-Sensoren 1, den zeitlich periodischen Verlauf des Ausgangssignals $U_{sig}$ an den drei Leseverstärkern 31 bzw. 32 und den zeitlichen Verlauf des Ausgangssignals der drei Komparatoren 33 gemäß Fig. 3. Der Magnetbandfluß 41 tritt aus der Spur 51 aus und ist proportional zu sin ($k\bar{v}t$), wenn mit $\bar{v}$ die Bewegungsgeschwindigkeit der Sensoren bezeichnet wird. Die Magnetbandflüsse 42, 43 treten aus den Spuren 52, 53 aus. Die Signalspannung $U_1$ ist proportional zu ($\sin^2 (k\bar{v}t) - 1/2$). Die Ausgangssignale 47, 48 und 49 werden an den Ausgängen der drei Komparatoren 33 abgegriffen.

Die drei Signalspannungen $U_1$, $U_2$, $U_3$ sind jeweils direkt an den +Eingang des zugehörigen Komparators 33 angeschlossen. 47 bezeichnet also die Zustandsänderung am Ausgang

des zum Signal $U_1$ gehörigen Komparators. Die Zustandsänderungen 48, 49 entsprechen den Signalspannungen $U_2$, $U_3$.

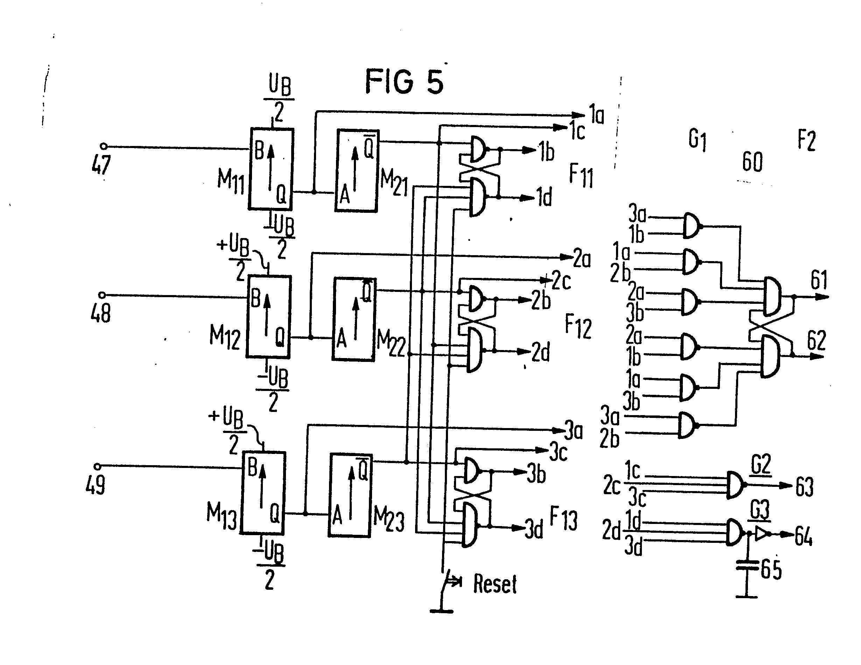

Fig. 5 zeigt eine Schaltung für eine Auswertelogik für eine digitale Längenmeßvorrichtung mittels dreier MR-Sensoren 1 und drei Aufzeichnungsspuren 51, 52, 53 auf Magnetband 4.gemäß Fig. 2 und Fig. 3, wobei Zähler und Anzeige in der Zeichnung nicht dargestellt sind. Der Zählvorgang läuft dabei wie folgt ab: Durch Schließen des Reset-Kontakts werden alle d-Ausgänge 1d, 2d, 3d der drei Flip-Flops $F_{11}$, $F_{12}$, $F_{13}$ auf den Zustand H("high") gesetzt und folglich alle b-Ausgänge 1b, 2b, 3b dieser drei Flip-Flops $F_{11}$, $F_{12}$, $F_{13}$ auf den Zustand L ("low"). Dadurch (1d, 2d, 3d) entsteht am Ausgang 64 des Gatters $G_3$ ein Pegel H. Der Ausgang 64 des Gatters $G_3$ führt zum Zähler-Reset. Dieser Reset-Pegel H am Gatter $G_3$ bleibt auch bestehen, wenn der Reset-Kontakt wieder geöffnet wird.

Im folgenden werden die drei MR-Sensoren 1 in Fig. 2 von links nach rechts bewegt. Der erste Flußwechsel möge in Spur 51 stattfinden. Dadurch wird im Ausgangssignal 47 eine positive Flanke und damit über das Monoflop $M_{11}$ an den beiden Eingängen 1a der sechs Eingangsgatter $G_1$ der Zählrichtungslogik 60 kurzzeitig ein H-Zustand erzeugt. Dieser H-Zustand hat weiter keine Folgen, da vom Schließen des Reset-Kontaktes her die korrespondierenden Eingänge 2b und 3b im L-Zustand sind. Die Ausgänge 61 und 62 des Zählrichtungs-Flip-Flops $F_2$ werden dabei nicht geändert. Eine positive Flanke im Ausgangssignal 47 ist in Fig. 4 mit einem nach oben gerichteten Pfeil bezeichnet. Beim Rückkippen des Monoflops $M_{11}$ kippt das Monoflop $M_{21}$. Dadurch geht der Ausgang $\bar{Q}$ von $M_{21}$ vom Zustand H zum Zustand L kurzzeitig über. Infolgedessen nimmt der Ausgang 1b des Flip-Flops $F_{11}$ den H-Zustand an, der Ausgang 1d wird auf den Zustand L gesetzt und das Zähler-Reset am Ausgang 64 wird aufgehoben, während die entsprechenden b-Ausgänge

der Flip-Flops $F_{12}$ und $F_{13}$ auf den Zustand L gesetzt werden, soweit sie nicht schon durch die angeführte Betätigung des Reset-Schalters auf den Zustand L gesetzt worden waren. Die Monoflops $M_{11}$, $M_{12}$, $M_{13}$ schalten bei positiven Flanken an ihren Eingängen B und die Monoflops $M_{21}$, $M_{22}$, $M_{23}$ schalten bei negativen Flanken an ihren Eingängen A. Die Kippzeiten der Monoflops sollen höchstens halb so lang sein wie die minimal zu erwartende Zeit zwischen zwei Flußwechseln. Mit Masse-Potential ist die Mitte zwischen $+U_B/2$ und $-U_B/2$ bezeichnet. Wird die Schaltungsanordnung z.B. in TTL-Technik ausgeführt, so erstreckt sich beim TTL-Gatter die Versorgungsspannung zwischen $-U_B/2$ und $+U_B/2$.

Werden die MR-Sensoren 1 in Fig.2 nun weiter von links nach rechts bewegt, so geht als nächstes der Ausgang 2a des Monoflops $M_{12}$ kurzzeitig auf den Zustand H. Jenes Eingangsgatter der Zählrichtungslogik 60, das gleichzeitig mit den Signalen 2a und 1b verbunden ist, geht ebenso lange an seinem Ausgang auf den Zustand L und setzt dadurch das Flip-Flop $F_2$ an dessen Ausgang 62 auf den Zustand H, womit die Zählrichtung auf "aufwärts" festgelegt wird. Beim Rückkippen von $M_{12}$ werden analog zur oben beschriebenen Weise über den Ausgang $\overline{Q}$ von $M_{22}$ der Ausgang 2b von $F_{12}$ auf den Zustand H,

die entsprechenden Ausgänge $F_{11}$ und $F_{13}$ jeweils auf den Zustand L gesetzt. Bei darauffolgendem Flußwechsel in Spur 53 liefert der Ausgang 3a von $M_{13}$ kurzzeitig einen H-Impuls. Der Ausgang desjenigen Gatters von $G_1$, an dessen Eingängen die Signale 3a und 2b anliegen, wird ebenso kurzzeitig auf den Zustand L gesetzt. Das Zählrichtungs-Flip-Flop $F_2$ bleibt auf "aufwärts" gesetzt, weil am Ausgang 62 von $F_2$ der Zustand H vorliegt.

Bewegt man nun die MR-Sensoren 1 in Fig.2 von rechts nach links, so ist die Reihenfolge der Flußwechsel in einzelnen Magnetspuren eine andere, z.B. der erste Flußwechsel in Spur 52, der zweite in Spur 51 und der dritte Flußwechsel in Spur 53. Durch einen Flußwechsel in Spur 52 liefert der Ausgang 2a von $M_{12}$ kurzzeitig einen H-Impuls. Der Ausgang 5b von $F_{13}$ befindet sich vom vorhergehenden Flußwechsel her noch im Zustand H. Der Ausgang desjenigen Gatters von $G_1$, an dessen Eingängen die Signale 3b und 2a anliegen, geht kurzzeitig auf den Zustand L und schaltet das Flip-Flop $F_2$ auf "abwärts", weil nunmehr am Ausgang 61 von $F_2$ der Zustand H vorliegt. Beim nächsten Flußwechsel in Spur 51 geht dasjenige Eingangsgatter von $G_1$ auf den Zustand L, das die beiden Eingänge 2b und 1a aufweist. Der Zustand des Zählrichtungs-Flip-Flops $F_2$ bleibt dabei erhalten. Die Pegel an den b-Ausgängen der Flip-Flops $F_{11}$, $F_{12}$, $F_{13}$ geben folglich eine Information darüber, welche Spur zuletzt ein Signal erzeugt hat, und damit eine Information über die Verschieberichtung der MR-Sensoren 1. Die eigentlichen Zählimpulse werden über die c-Ausgänge der Monoflops $M_{21}$, $M_{22}$, $M_{23}$ erzeugt, die nach jedem Flußwechsel kurzzeitig auf den Zustand L gehen und dadurch den Ausgang des Gatters $G_2$ ebensolange auf den Zustand H setzen. Zählimpulse werden also erst erzeugt, nachdem durch die Monoflops $M_{11}$, $M_{12}$, $M_{13}$ die Zählrichtungslogik 60 in den richtigen Zustand gesetzt worden ist. Ein Verzögerungsglied 65 im Zähler-Reset-Gatter $G_3$ verhindert, daß der erste clock-Impuls nach einem Reset bereits auf einen entsperrten Zähler trifft, solange die Zählrichtung noch nicht festgelegt ist. Die Verzögerungszeit des Verzögerungsgliedes 65 muß also größer als die Kippzeit eines Monoflops sein.

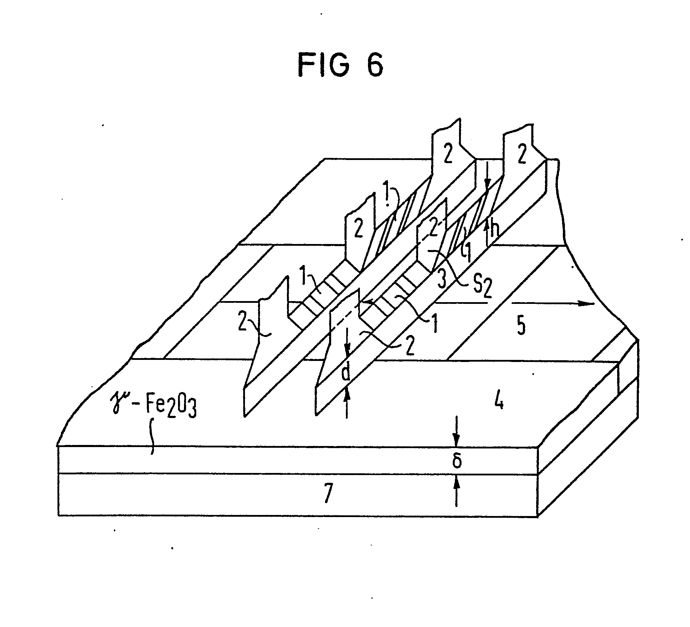

Fig. 6 zeigt das Prinzip einer Vorrichtung zur digitalen Längenmessung mit zwei hintereinander geschalteten, linearen MR-Sensoren 1 in einer speziellen Sensoranordnung und einer Aufzeichnungsspur 5 auf Magnetband 4. Die übrigen Bezeichnungen stimmen mit den bei Fig. 2 angegebenen Bezeichnungen überein. Wenn man z. B. zwei MR-Sensoren 1 mit linearisierter Kennlinie, z. B. nach dem Barber-Pole-Prinzip, dicht hintereinander anordnet, so kommt man auch mit einer einzigen Spur 5 aus. Bei 10 µm Meßauflösung müßten die beiden Teilsensoren 10 µm Abstand haben, der Fluß-

wechselabstand muß dann 20 μm betragen. Der Abstand der beiden MR-Sensoren 1 zueinander ist also gleich dem halben Flußwechselabstand. Ein solcher geschichteter Doppelsensor ist mit den Mitteln der Schichttechnik ohne weiteres realisierbar, erfordert aber einen höheren Herstellungsaufwand im Vergleich zu den 3-fach-Sensoren wie gemäß Fig. 2 beschrieben. Die Leiterstege der Barber-Poles vermindern zwar den elektrischen Widerstand auf ca. ein Drittel, dafür darf jedoch bei gegebener Breite des Magnetbandes 4 der MR-Sensor 1 dreimal so lang werden wie ein einzelner MR-Sensor 1 aus der Drei-Spuranordnung von Fig. 2. Der im Vergleich zu einer Vorrichtung gemäß Fig. 2 geringere Flußwechselabstand und die dadurch bedingte geringere Reichweite des Streufeldes aus dem Magnetband bei einer Vorrichtung gemäß Fig. 6 erfordert es, den "Magnetkopf" dichter über dem Magnetband 4 zu führen.

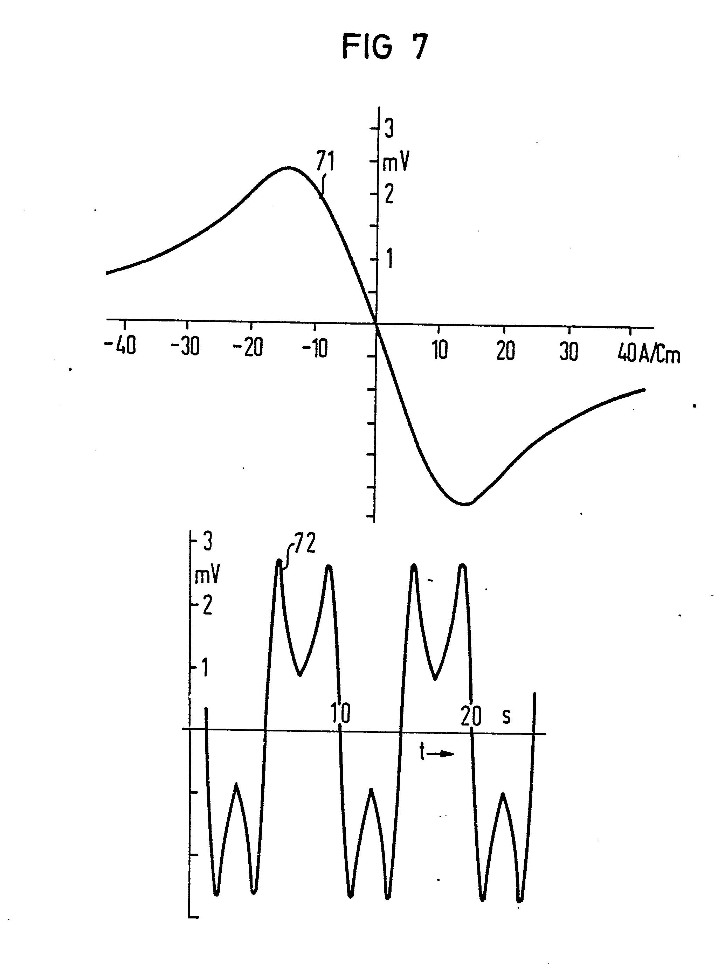

Fig. 7 zeigt die Magnetowiderstands-Kennlinie 71 eines linearisierten MR-Sensors 1 vom Barber-Pole-Typ mit einer Sensorlänge von 1 mm, einer Sensorbreite von 25 μm und einer Sensordicke von 35 nm. Außerdem zeigt Fig. 7 die Signalspannung 72 des im Zusammenhang mit der Magnetowiderstands-Kennlinie 71 angegebenen MR-Sensors 1 gegen die Zeit t bei Übersteuerung. Die Form der durch Linearisierung erhaltenen Kennlinie 71 ist dergestalt, daß eine Übersteuerung zu einer unzulässigen Signalabnahme bzw. zu einem Doppelpeak bei der Signalspannung 72 führt.

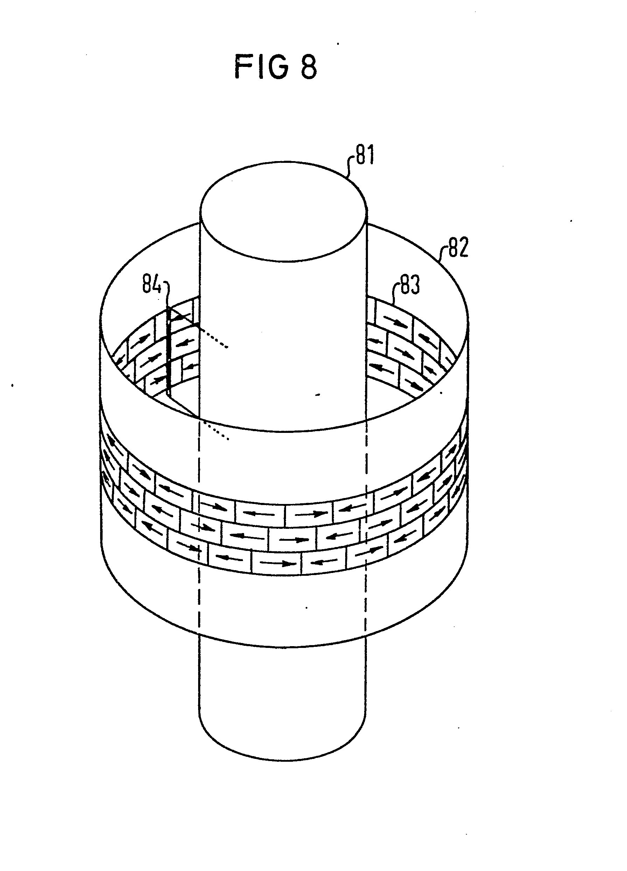

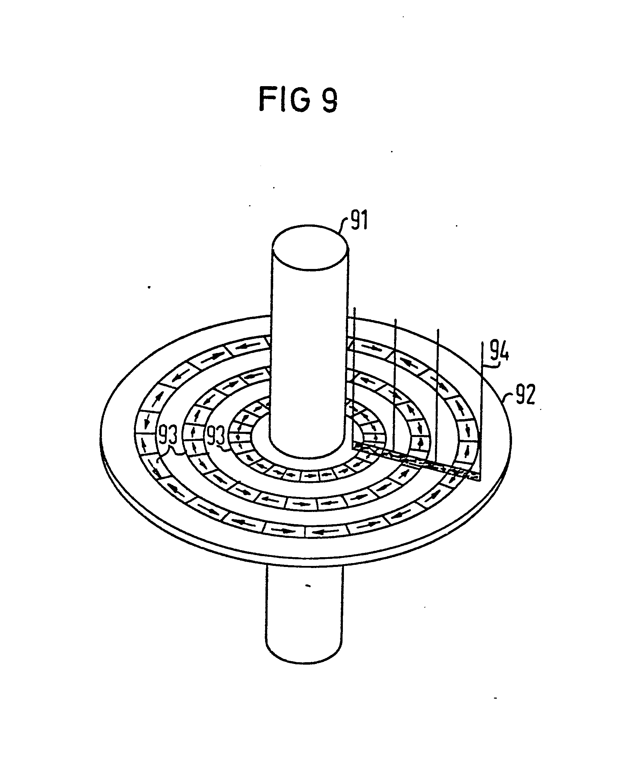

Das oben beschriebene Prinzip zur digitalen Längenmessung läßt sich auch zur Realisierung eines Winkelcodierers hoher Auflösung einsetzen. Dafür gibt es mindestens zwei Realisierungsmöglichkeiten. Fig. 8 zeigt einen digitalen Winkelcodierer auf magnetischer Basis. Der MR-Sensor 84 besteht aus drei MR-Sensoren mit quadratischer Kennlinie. Der MR-Sensor 84 wird federnd auf einem Rad 81 befestigt, das im Innern eines Hohlzylinders läuft, auf dessen Wandung das Magnetband 82 befestigt ist. Das Magnetband 82 weist z. B. drei Aufzeichnungsspuren 83 mit sinusförmigem, $60^{\circ}$-phasenverschobenen Flußverlauf auf. Fig. 9 zeigt ebenfalls einen digitalen Winkelcodierer auf magnetischer Basis. Dabei befindet sich die codierte Information auf einer magnetisch beschichteten Scheibe 92, z. B. einer Mikrodiskette. Diese magnetisch beschichtete Scheibe 92 ist fest an der Achse 91 montiert. Der "Magnetkopf" 94 ist ebenfalls an der Achse 91 befestigt, und zwar in Radialrichtung starr, und um die Achse drehbar in Vertikalrichtung federnd. Die magnetisch beschichtete Scheibe 92 weist Magnetspuren 93 auf. Im übrigen gilt das oben zu den linear codierten Längenmessern Gesagte für digitale Winkelcodierer, wie sie z. B. in Fig. 8 oder in Fig. 9 dargestellt sind.

Im folgenden wird eine Abschätzung für die gemäß Fig. 2 und gemäß Fig. 3 zu erwartenden Signale gegeben. Das Magnetband 4 sei ein Eisenoxid-Band ($\gamma$-$Fe_2O_3$) mit der Beschichtungsdicke $\delta$ von 10 $\mu$m, einer Remanenzinduktion $B_r$ von 0,12 T, und einer sinusförmigen Magnetisierung über die ganze Dicke mit 60 $\mu$m Wellenlänge. Der ungeschirmte MR-Sensor, welcher die drei MR-Sensoren 1 umfaßt, weist eine Länge l von 3 x 1 mm auf, eine Dicke t von 30 nm, eine Breite h von 5 $\mu$m, einen spezifischen Widerstand $\rho$ von 23 $\mu\Omega$cm und eine maximale relative Widerstandsänderung $\Delta R/R$ von 2% auf. Daraus ergibt sich ein Widerstand $R_s$ des einzelnen MR-Sensors 1 von 1,5 k$\Omega$, ein Leistungsverbrauch des 3-fach-Sensors bei 1,5 Volt Betriebsspannung von 0,5 mW und ein maximal mögliches Lesesignal pro Spur von 5 mVolt bei einer Verstärkung v von 1. Das Maximalsignal wird erreicht bei einem Feld von mindestens 55A/cm.

Gemäß der oben zitierten Arbeit von R.P. Hunt errechnet sich das aus einem sinusförmig mit der Wellenlänge $\lambda$ magnetisierten Magnetband der Dicke $\delta$, der remanenten Magne-

tisierung $M_r$ austretende Streufeld, wenn es über eine Sensorbreite h gemittelt ist, beim Abstand d der Sensorunterkante zum Magnetband zu.

$$H = \frac{M_r}{2} \cdot e^{-kd} \cdot (1-e^{-k\delta}) \cdot \frac{(1-e^{-kh})}{kh} \quad ,$$

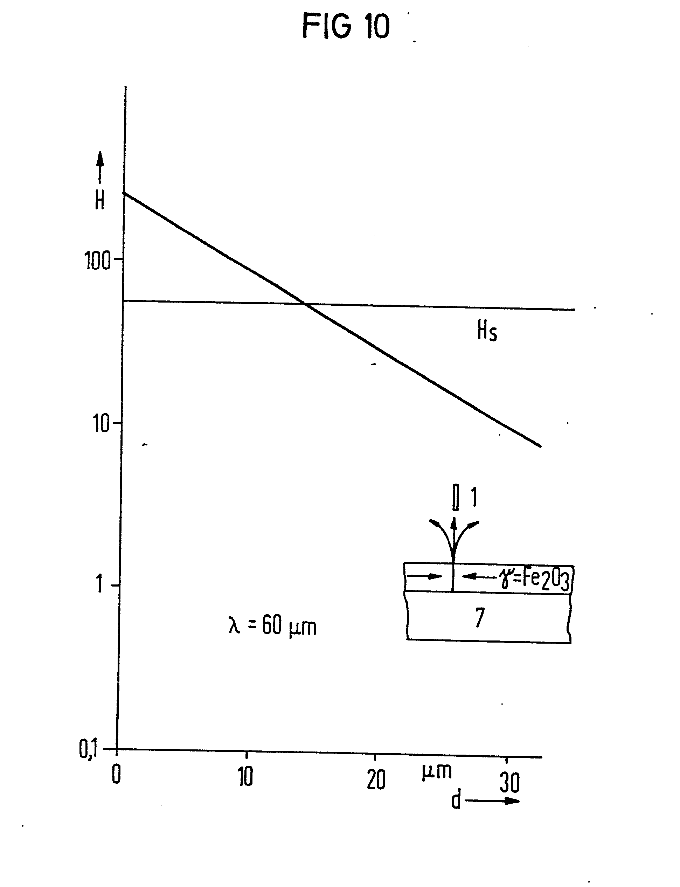

wobei $k = 2\pi/\lambda$ die bekannte Kreiswellenzahl darstellt. Fig. 10 zeigt das erfaßte mittlere Streufeld H, welches aus dem Eisenoxid-Band kommt, in Abhängigkeit vom Abstand d der Sensorunterkante zur Magnetbandoberfläche. Dabei ist eine Wellenlänge $\lambda$ von 60 $\mu$m angenommen worden. Bei 55 A/cm ist das Sättigungsfeld $H_s$ des Sensors eingetragen. Gemäß den angegebenen Daten wäre ein Abstand d der Sensorunterkante zur Magnetbandoberfläche von 15 bis 20 $\mu$m optimal. Für einen Abstand d von 18 $\mu$m ergibt sich ein Lesesignal von 5 $(\frac{H}{H_s})^2$ = 2,1 mV. In Fig. 10 ist außerdem noch eine Anordnung mit einem MR-Sensor 1 und einem Magnetband dargestellt, wobei am Orte des Flußwechsels das Streufeld aus dem Magnetband austritt.

Bei erfindungsgemäßen digitalen Längenmeßsensoren sind Einflüsse äußerer Störfelder nicht in größerem Maße zu befürchten. Dies gilt einmal wegen der hartmagnetischen Natur der Magnetbandbeschichtung ($H_c$ > 200 A/cm). Äußere Magnetfelder in Längsrichtung des Sensors sind in der Lage, die Empfindlichkeit des MR-Sensors zu schwächen und unter Umständen ein Signalrauschen, bedingt durch Domänenaufspalten, zu induzieren. Da aber nur Null-Durchgänge ausgewertet werden, wirkt sich das nicht übermäßig kritisch aus. Externe Felder senkrecht zur Sensorrichtung werden schädlich, wenn sie in der Lage sind, den Sensor in die Sättigung zu treiben. Auch hier gibt es Möglichkeiten, über dickere bzw. schmalere Sensorstreifen in großem Umfang Abhilfe zu schaffen.

Die Abnutzung des "Magnetkopfes" im Betrieb ist im Vergleich zur Anwendung in Magnetbandgeräten gering, weil Bewegungsdauer und Bewegungsgeschwindigkeit vergleichsweise gering sind. Überdies führt eine Abnutzung allenfalls zu einer Signalerhöhung bzw. zu einer Signalsättigung. Wiederum wegen der alleinigen Bewertung der Null-Durchgänge ist auch das nicht kritisch.

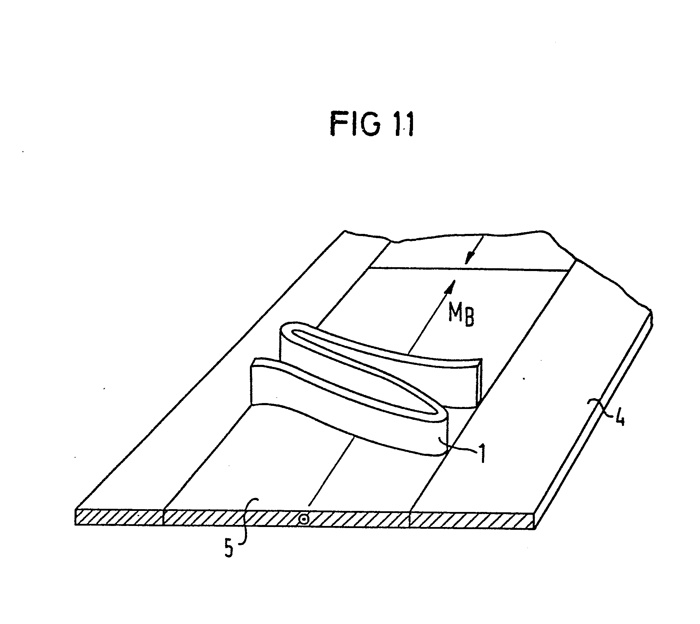

Fig.11 zeigt einen zweimal gefalteten MR-Sensor 1 über der Magnetspur 5 des Magnetbandes 4. Elektrische Zuleitungen und mechanische Befestigung des MR-Sensors 1 sind in dieser Fig.11 nicht dargestellt. Der gefaltete MR-Sensor 1 ist hochohmiger als ein nicht gefalteter MR-Sensor und benötigt für gleiches Signal weniger Strom. Dadurch wird ein Batteriebetrieb eines erfindungsgemäßen digitalen Meßsensors ermöglicht. Wenn der Flußwechselabstand relativ groß ist im Vergleich zur Dicke des gefalteten MR-Sensors 1, tasten die einzelnen Ebenen dieses gefalteten MR-Sensors 1 ungefähr den gleichen magnetischen Fluß ab und wirken deshalb wie ein MR-Sensor der mehrfachen Länge, welcher sich auf einer einzigen Ebene erstreckt. Der gefaltete MR-Sensor 1 kann in zwei oder mehr Ebenen übereinanderliegen. In der Erfindung eingeschlossen ist jedoch auch jede andere Faltung des MR-Sensors 1, welche den Sensorwiderstand erhöht.

Der Leistungsverbrauch des MR-Sensors 1 ist gegeben durch die Betriebsspannung und den elektrischen Sensorwiderstand. Ein minimaler Leistungsverbrauch bei gegebener Breite der Magnetspur 5 und gegebener Betriebsspannung sowie minimaler Sensorbreite (3 um) und Sensordicke (20 nm) wird durch das Falten des MR-Sensors 1 und durch die dadurch sich ergebende Erhöhung des Sensorwiderstands erzielt. Die Spurbreite der Magnetspur 5 wird im allgemeinen etwa 0,5 - 3 mm betragen.

Patentansprüche:

1. Digitaler Meßsensor mit zwei relativ zueinander verstellbaren Teilen, von denen einer einen Maßstab und der andere einen Detektor zum Abtasten des Maßstabes und zum Erzeugen elektrischer Signale trägt, und mit einer Elektronik zum Verarbeiten der Detektorsignale, wobei der Maßstab einen Markierungsträger mit magnetisierbarem Material aufweist, welcher in vorbestimmten Abständen zur Bildung von ablesbaren Markierungen magnetisiert ist, d a d u r c h   g e k e n n z e i c h n e t ,   daß der Detektor mindestens einen magnetoresistiven Sensor aufweist.

2. Digitaler Meßsensor nach Anspruch 1,   g e k e n n -z e i c h n e t   d u r c h   magnetoresistive Sensoren mit linearisierter Kennlinie.

3. Digitaler Meßsensor nach Anspruch 2,   g e k e n n -z e i c h n e t   d u r c h   Brückenschaltungen mit magnetoresistiven Sensoren.

4. Digitaler Meßsensor nach Anspruch 1,   g e k e n n -z e i c h n e t   d u r c h   magnetoresistive Sensoren mit quadratischer Kennlinie.

5. Digitaler Meßsensor nach Anspruch 4,   g e k e n n -z e i c h n e t   d u r c h   Spannungsteilerschaltungen mit magnetoresistiven Sensoren.

6. Digitaler Meßsensor nach Anspruch 1 bis 5,   d a -d u r c h   g e k e n n z e i c h n e t ,   daß die Sensoren zwischen abriebfesten Materialien eingebettet sind.

7. Digitaler Meßsensor nach Anspruch 1 bis 6,   d a -d u r c h   g e k e n n z e i c h n e t ,   daß der Markierungsträger eine hartmagnetische Schicht ist.

8. Digitaler Meßsensor nach Anspruch 1 bis 7, d a - d u r c h   g e k e n n z e i c h n e t ,   daß die Markierungen von mehreren Sinusspuren gebildet sind, wobei jede Spur phasenverschoben mit Flußwechseln gleichen Abstands beschrieben ist.

9. Digitaler Meßsensor nach Anspruch 1 bis 8, g e - k e n n z e i c h n e t   d u r c h   einen weiteren Festkörper mit gleichem Temperaturkoeffizienten wie bei $\Delta R/R$ zur temperaturgesteuerten Verstärkungseinstellung.

10. Digitaler Meßsensor nach Anspruch 2 oder 3, d a - d u r c h   g e k e n n z e i c h n e t ,   daß die Längeninformation codiert in mehreren parallelen Spuren enthalten ist.

11. Digitaler Meßsensor nach Anspruch 10, d a d u r c h   g e k e n n z e i c h n e t ,   daß die Längeninformation binär codiert ist.

12. Digitaler Meßsensor nach Anspruch 10, d a d u r c h   g e k e n n z   e i c h n e t ,   daß die Längeninformation im Gray-Code aufgezeichnet ist.

13. Verwendung eines digitalen Meßsensors nach Anspruch 1 bis 12 als Winkelcodierer.

14. Verwendung eines digitalen Meßsensors nach Anspruch 1 bis 12 für eine elektronische Schieblehre.

15. Verwendung eines digitalen Meßsensors nach Anspruch 1 bis 12 für einen Positionsgeber.

16. Verwendung eines digitalen Meßsensors nach Anspruch 1 bis 12 für einen Drucksensor.

17. Verwendung eines digitalen Meßsensors nach Anspruch 1 bis 12 für 1 Mikrometerschraube

18. Verfahren zur Herstellung eines digitalen Meßsensors nach Anspruch 1 bis 17, d a d u r c h   g e k e n n - z e i c h n e t ,   daß die Magnetschicht auf eine Schiene mit kleinem Temperaturkoeffizienten aufgeklebt wird.

19. Verfahren zur Herstellung eines digitalen Meßsensors nach Anspruch 1 bis 18, d a d u r c h   g e k e n n - z e i c h n e t ,   daß die Magnetschicht erst nach der Befestigung auf einem Träger mit Markierungen versehen wird.

20. Digitaler Meßsensor nach einem der vorhergehenden Ansprüche, g e k e n n z e i c h n e t   durch zwei Präzisionsdifferenzverstärker (31), wobei aus zwei Spannungsteilersignalen ($U_1$, $U_3$) drei Flußwechselsignale (47, 48, 49) erzeugt werden.

21. Digitaler Meßsensor nach einem der vorhergehenden Ansprüche, g e k e n n z e i c h n e t   d u r c h Komparatoren (33) zur Erzeugung von Flanken der drei Flußwechselsignale (47, 48, 49).

22. Digitaler Meßsensor nach Anspruch 21, d a d u r c h   g e k e n n z e i c h n e t ,   daß die Komparatoren (33) mit Hysterese ausgestattet sind.

23. Digitaler Meßsensor nach einem der vorhergehenden Ansprüche, g e k e n n z e i c h n e t   d u r c h zwei Impulserzeugerreihen ($M_{11}$, $M_{12}$, $M_{13}$ und $M_{21}$, $M_{22}$, $M_{23}$) und eine Speicherreihe ($F_{11}$, $F_{12}$, $F_{13}$), wobei die erste Impulserzeugerreihe ($M_{11}$, $M_{12}$, $M_{13}$) zusammen mit der Spei- cherreihe ($F_{11}$, $F_{12}$, $F_{13}$) eine Zählrichtung festlegt und wobei die zweite Impulserzeugerreihe ($M_{21}$, $M_{22}$, $M_{23}$)

zusammen mit der ersten Impulserzeugerreihe ($M_{11}$, $M_{12}$, $M_{13}$) die Zählimpulse liefert.

24. Digitaler Meßsensor nach einem der vorhergehenden Ansprüche, g e k e n n z e i c h n e t   d u r c h einen Speicher ($F_2$) mit einer Speichersteuerlogik ($G_1$) zur Erzeugung und Speicherung der Zählrichtung.

25. Digitaler Meßsensor nach einem der vorhergehenden Ansprüche, g e k e n n z e i c h n e t   d u r c h eine Vorrichtung ($G_2$) zur Verarbeitung der Zählimpulse aus den Signalen der zweiten Impulserzeugerreihe ($M_{21}$, $M_{22}$, $M_{23}$).

26. Digitaler Meßsensor nach einem der vorhergehenden Ansprüche, d a d u r c h   g e k e n n z e i c h - n e t , daß die beiden Impulserzeugerreihen ($M_{11}$, $M_{12}$, $M_{13}$ und $M_{21}$, $M_{22}$, $M_{23}$) durch Flußwechselsignalflanken (47, 48, 49) gesteuert werden.

27. Digitaler Meßsensor nach einem der vorhergehenden Ansprüche, g e k e n n z e i c h n e t   d u r c h eine Logik ($G_3$) zur Erzeugung eines Zähler-Reset-Impulses (64) aus den Signalen der Speicherreihe ($F_{11}$, $F_{12}$, $F_{13}$), wobei ein Verzögerungsglied (65 ) zur Verzögerung des Zähler-Reset-Impulses (64) eingebaut ist.

28. Digitaler Meßsensor nach einem der vorhergehenden Ansprüche, g e k e n n z e i c h n e t   d u r c h eine Vorrichtung (Reset) an der Speicherreihe ($F_{11}$, $F_{12}$, $F_{13}$), so daß der Zähler-Reset-Impuls (64) bei Betätigung dieser Vorrichtung über die Ausgänge der Speicherreihe ($F_{11}$, $F_{12}$, $F_{13}$) erzeugt wird.

29. Digitaler Meßsensor nach einem der vorhergehenden Ansprüche, dadurch g e k e n n z e i c h n e t , daß mindestens ein magnetoresistiver Sensor (1) gefaltet ist.

## FIG 1

## FIG 3

## FIG 2

## FIG 4

$$\sin^2(k\bar{v}t) - \tfrac{1}{2}$$

0069392

FIG 5

FIG 6

FIG 7

FIG 8

FIG 9

FIG 10

FIG 11